Europäisches Patentamt

(19) European Patent Office

Office européen des brevets

(11) Publication number: **0 021 793**
**A1**

(12) **EUROPEAN PATENT APPLICATION**

(21) Application number: **80302063.5**

(22) Date of filing: **18.06.80**

(51) Int. Cl.³: **H 01 M 4/76**

(30) Priority: **18.06.79 US 49594**
**28.04.80 US 144258**

(43) Date of publication of application:
**07.01.81 Bulletin 81/1**

(84) Designated Contracting States:
**CH DE FR GB IT LI SE**

(71) Applicant: **KOEHLER MANUFACTURING COMPANY**
**123 Felton Street**
**Marlborough, Massachusetts 07152(US)**

(72) Inventor: **Sundberg, Erik**
**447 Union Street**
**Newtown Crossing PA 18940(US)**

(74) Representative: **Haggart, John Pawson et al,**
**Page, White & Farrer 27 Chancery Lane**
**London, WC2A 1NT(GB)**

(54) **A textured tubular body for use in a tubular storage battery plate and a method of making that body.**

㊿ A textured tubular body for use in a tubular storage plate is produced by a braiding or weaving technique, and has a latticework of spaced apart reinforced tapes (2,4) which are interwoven to define interrupted rows of spaces (6) and control the porosity of the tubular body. A foraminous material (10,12), which retains active material of the battery plate, is arranged to close the spaces (6) in the latticework.

The tapes (2,4) are braided along oppositely directed helical paths to produce a seamless latticework in which the rows of spaces (6) occur angularly with respect to one another. Simultaneously a network of foraminous fibers (10,12) is braided and interwoven with the latticework. The foraminous fibers (10,12) are confined between edges of the tapes (2,4) to provide a desired porosity in the textured material.

EP 0 021 793 A1

Fig. 1

A textured tubular body for use in a tubular storage
battery plate and a method of making that body

Lead-acid batteries of the tubular type are
customarily constructed with positive plates, constituent parts
of which include:  a grid member having a top bar;  a post or
burning lug and a plurality of current carrying spines in
spaced relation depending from one side of the top bar;
pencils of active material surrounding the current carrying
spines;  tubular bodies arranged to support and confine the
pencils of active material and maintain such active material in
contact with the current carrying spines;  and means for
closing ends of the tubes.

The tubular bodies are required to provide a number
of functions including:  enclosure and support of the active
material to maintain said active material in contact with the
spines;  maintenance of the dimensional stability of the pencils
of active material particularly during periods of swelling of
the said active material;  and, finally, provision of adequate
communication between the electrolyte and the active material
throughout the length of the tubular bodies.

"Porosity" is the term commonly employed to define
the degree of communication between the active material and the
electrolyte through the wall portions of the tubular bodies.

- 2 -

Porosity can be further defined mathematically as the ratio of the surface area of openings in the wall portions to the overall surface area of the tubular bodies, commonly expressed in terms of a percentage.

In batteries which are intended for relatively high discharge rates the porosity of the tubular bodies may be relatively high, e.g. in the order of 50 to 70 percent. In batteries intended for low discharge rates porosity may be relatively lower, e.g. in the order of 30 to 50 percent.

With reference to the aforementioned functions of a tubular body, variables in the design of the tubular body of the class noted include: "strength", which is a function of the material selected and of the porosity; "volumetric displacement of electrolyte", which is a function of wall thickness and which will be increased if an overlapping seam is present within the wall; "porosity", previously defined and which may decrease should an overlapping seam be present in the tube wall if the pores in the overlapping portions do not precisely overlie one another; undesirable "gas polarization", i.e. inpedance to the passage of gas bubbles which evolve during charging and which is related to the configuration of the pores, being greatest when the pores are round openings.

Obviously, an optimized tubular body will incorporate some compromise between the optimum values of these variables. The value of certain of the variables, e.g. porosity, strength, configuration etc., may be dictated by optimal design of the battery cell with respect to the use for which it is intended.

The prior art, recognizing these facts, has evolved four general types of tubes presently in use. The first is a double-wall structure having an inner seamless tube braided from staple fibers, usually glass or a mixture of glass and plastic, over which is formed an outer strength tube of lapped and seamed construction from perforated polyvinyl chloride sheet material. This type of tube provides certain disadvantages, for example: the wall thickness is relatively great; a lapped seam is present which increases volumetric displacement of electrolyte; the perforations or openings in the lapped portions may not overlie one another, thus reducing porosity at these portions; cost of perforation dies is extremely high so that changes in porosity are prohibitively expensive; and polyvinyl chloride may not be chemically inert in the electrolyte and thus may release harmful chlorides into the battery cell. The porosity of this type of tube is commonly expressed as the ratio between the area of the perforation of the sheet material to the total area of the tube in terms of a percentage.

The second type of tube is a seamless singlewall construction again braided from staple fibers but then impregnated with a stabilizing material such as a phenolic resin. This type of tube is less strong and less dimensionally stable than the first type, and the phenolic resin tends to break down during operation of the battery leaving the tube with little dimensional stability and this breakdown may introduce potentially harmful organic compounds such as acetic acid into the electrolyte. In some cases axially disposed fibers may be included in the braid.

- 4 -

The third type is a multiple tube array commonly woven from staple fibers on a cartridge-belt type loom. The structure is customarily impregnated with a stabilizing resin of a nature such as that noted above and which is subject to the same disadvantages.

The fourth type is also a multiple tube array formed from non-woven foraminous material, e.g. a needle-punched polyester, sheets of which are stitched or sewed together to form individual tubes.

All of these present configurations present compromises between the various cited requirements for an optimal tubular body. Changes in precise control of porosity and cross-sectional configuration are difficult or expensive to obtain in all cases, strength is compromised by mechanical design considerations, and some form of potential chemical contamination is generally present. In addition, such tubes are customarily made, shipped and stored in a generally cylindrical shape or other shape necessarily requiring a great deal of space which increases the cost of said shipment and storage.

It is an object of the invention to provide tubular bodies for positive plates of lead-acid batteries, which tubular bodies are made using improved techniques for selecting and arranging components in braiding or weaving procedures.

The invention as claimed is intended to remedy the drawbacks of these types of tubes. The invention solves the problem by providing a textured tubular body for use in a tubular storage battery plate, which body is formed by a latticework of spaced apart reinforced tapes interwoven to define interrupted rows of spaces and control the porosity of the tubular body, and a foraminous material consisting of means for retaining active material arranged to close the interrupted rows of spaces in the latticework.

The invention also provides a method of making a textured tubular body for use in a tubular storage battery plate, characterised by braiding reinforced thermoplastic tapes along oppositely directed helical paths of travel in spaced relation to define a seamless latticework in which interrupted rows of spaces occur angularly with respect to one another, and simultaneously braiding a network of foraminous material which is interwoven with the latticework while confining said foraminous material between edges of the spaced apart tapes to provide a desired porosity characteristic in the textured material.

The advantages offered by the invention are mainly that there is provided virtually complete control of variables such as has been outlined above, reference being made especially to strengthening of tubular bodies, ability to maintain support and retaining means for active material in the tubular bodies, and provision of suitably designed usages of porosity characteristics whereby satisfactory communication between active material and battery electrolyte is achieved.

Another advantage is the use of texturing techniques, particularly as involved in braiding, cartridge-belt weaving . or other procedures, whereby tubular bodies of specially textured character may be produced not only in a finished state completely ready for installation and operation in a battery, but also in intermediate stages of finishing to constitute commercially saleable products which can be purchased and held by a customer in a compacted and rolled state until actual finishing and installation is to take place at some later date.

Another advantage is the provision of improved methods of texturing wherein fabrication components occuring in differing sets of preformed material are separately produced and brought together in uniquely united relationship. In this uniquely united relationship fusion integrated masses of thermoplastic material selectively distributed throughout the textured bodies are utilized with a degree of efficiency not heretofore believed to have been realized in the art of employing fused thermoplastic materials. Embedding of foraminous material in the fused thermoplastic material is controlled.

Formulations for mathematically selecting components and associated parameters for fabricating tubular bodies may be derived in accordance with varying customer requirements and specifications.

These advantages are realized by means of specially formed fabrication components and methods of handling. For example, it is found that strengthening of the tubular bodies to provide maintained support and retention of active material is achieved to a very considerable extent by forming the latticework from a set of fabrication components consisting of the uniformly or otherwise spaced apart thermoplastic tapes which at a desired point in processing may be fused integrally with one another. These thermoplastic tapes, reinforced as hereinafter noted, are pre-shaped of a substantially rectangular cross-sectional configuration whose breadth equals and preferably exceeds their thickness.

Tapes of such a configuration, when arranged along appositely directed paths of crossover, and when disposed flatwise with adjacent edges in spaced apart relation, define openings in an open grating-like structure, through and around which there may be introduced and compacted other sets or networks of fabrication components of a foraminous or porous nature to provide a textured tubular body. In this way it becomes possible to establish a desirable communication of electrolyte with active material via the tube walls and, also, there may be realized a range of capillarity-induced "wicking" adaptable for maintaining communication between active material and electrolyte under varying electrolyte-level conditions in storage battery operation.

The thermoplastic tapes, when thus united with the foraminous fabrication components may, prior to fusion, further assume a state of stability which, in the case of a tubular body, may provide for collapsibility without undue displacement of the differing sets of fabrication components with respect to one another. This may be of advantage where extended lengths of the tubes are to be flattened out and wound into a roll for packaging and shipping as is hereinafter disclosed in detail.

In the partly finished state disclosed above, maintenance of retaining means in the tubular body of the invention is effectively achieved with a latticework made from sets of reinforced thermoplastic tapes in accordance with the invention combined with foraminous materials of various forms.

In tubular bodies in a completely finished state where fusing of the reinforced thermoplastic tapes has been accomplished, still further advantages accrue in reference to maintenance of retaining means around active material in the tubular bodies. It has been found that when a latticework made from a set of reinforced thermoplastic tapes, spaced apart from one another and having the breadth and thickness relationship noted earlier, is combined with foraminous fabrication components of the various forms as disclosed in the drawings, these foraminous components tend to compact between the spaced apart edges of the tapes and thus, when fusing takes place, not only do the tapes become fused integrally with one another at their points of crossover, but the foraminous components become embedded in the fused thermoplastic tape along undulating paths of distribution to impart a sinuosity characteristic which is inherent throughout the wall portions of the tube within which active material is to be retained. The tapes present openings similar to those of a grating so that embedded masses extend continuously in angularly disposed relationship as a porous gridwork of great stability and resistance to swelling forces exerted by active material, and in which excellent communication between the active material and the electrolyte is realized.

In thus embedding foraminous material wherein a substantial degree of pressure may be desirable at the time of fusing, it should be understood that the reinforcing means in the thermoplastic tapes are highly important in limiting the extent of penetration of the relatively hard foraminous components such as woven glass fiber or mixtures of glass fibers and other polyester type materials. Without the reinforcing means in the relatively soft thermoplastic tape such tapes may be completely severed by the foraminous components with loss of their strengthening function. It should also be kept in mind that the fusing or melting point of the thermoplastic tape should be lower than the temperature at which the reinforcing means softens or melts.

Some embodiments of the invention will now be described, by way of example, with reference to the accompanying drawings in which:-

Figure 1 is a perspective view of a composite textured tubular body of the invention,

Figure 2 is a detailed perspective view of a tape component of the invention illustrating one desirable form of reinforcing and showing an optional edge covering step,

Figure 2A is a view similar to Figure 2 showing a modified form of reinforcing,

Figure 3 is a perspective view of another form of reinforced tape component showing reinforcing elements disposed longitudinally therethrough,

Figure 4 is a perspective view of a helical latticework of tapes of the invention,

Figure 5 is a fragmentary enlargement of the latticework of Figure 4,

Figure 6 is a fragmentary enlargement of a portion of the structure shown in Figure 1,

Figure 6A is a fragmentary view similar to Figure 6 but showing in further detail the arrangement of components,

Figure 6B is a view taken on the line 6B-6B of Figure 6,

Figure 7 is a perspective view illustrating schematically the assembly of components of the composite tube of Figure 1,

Figure 8 is a detailed view of an optional step of partially fusing the composite tube of Figure 1,

Figure 9 is a schematic view illustrating a step in a method of collapsing a tube as shown in Figure 1 and winding it into a rolled form,

Figure 10 is another schematic view illustrating steps in a method of shaping, fusing and cutting the tube of Figure 9 to a desired length.

Figure 11A is a detailed view illustrating on a greating enlarged scale tapes and staple fibers prior to fusing,

Figure 11B is another detail view similar to Figure 11, but illustrating fusion integration of tapes at their points of crossover, and also illustrated is the embedding of staple fibers in the intervening spaces between the tapes,

Figure 11C is a view similar to Figure 11A, but illustrating tapes having reinforcement means comprising longitudinally disposed filaments,

Figure 11D is a view similar to 11A, but illustrating the tapes of Figure 11B,

Figure 12 is a view taken on the line 12-12 of Figure 10 showing pressure roller and mandrel means producing a circular tube configuration,

Figure 13 is a view similar to Figure 12, but showing roller and mandrel means producing a rectangular tube configuration,

Figure 14 is a view similar to Figures 12 and 13, but illustrating still another roller and mandrel means producing another tube configuration,

Figure 15 is a composite tube of the invention in which a latticework of tape is illustrated with strips of a non-woven foraminous material interbraided therewith,

Figure 16 is a perspective view of a modified form of tubular body comprising a latticework of tape braided around an inner tube portion braided of staple fiber,

Figure 17 is a perspective view illustrating a step of braiding the latticework of tape around a fibrous braided inner tube portion of staple fiber to produce the tube shown in Figure 16,

Figure 18 is a perspective view of a tube similar to Figure 16, but showing the inner tube portion comprising braided strips of non-woven foraminous material,

Figure 19 is a view similar to Figure 16, but showing the inner tube portion comprising a lapped tube of foraminous sheet material,

Figure 20 is a perspective view showing schematically details of making the tube of Figure 19,

Figure 21 illustrates a tube similar to that of Figure 16, but having axially disposed tapes of thermoplastic material included in the latticework,

Figure 22 is a perspective view illustrating diagrammatically fabrication of the tube of Figure 21,

Figure 23 is a view similar to Figure 21, but showing some of the axially disposed components masking off a portion of the tube wall,

Figure 24 is a view illustrating a multiple tube arrangement of tape and staple fiber interwoven in cartridge-belt form,

Figure 25 is a perspective view showing the tape latticework of the multiple tube arrangement of Figure 24,

Figure 26 is another multiple tube arrangement similar to Figure 24, but having strips of non-woven material replacing the staple fiber,

Figure 27 is a detailed view of a latticework of tape indicating diagrammatically variables which may be employed in mathematically selecting components and associated texturing parameters, and

Figure 28 is a view similar to Figure 27, but indicating variables which may be mathematically employed with respect to multiple tube arrangements of cartridge-belt form.

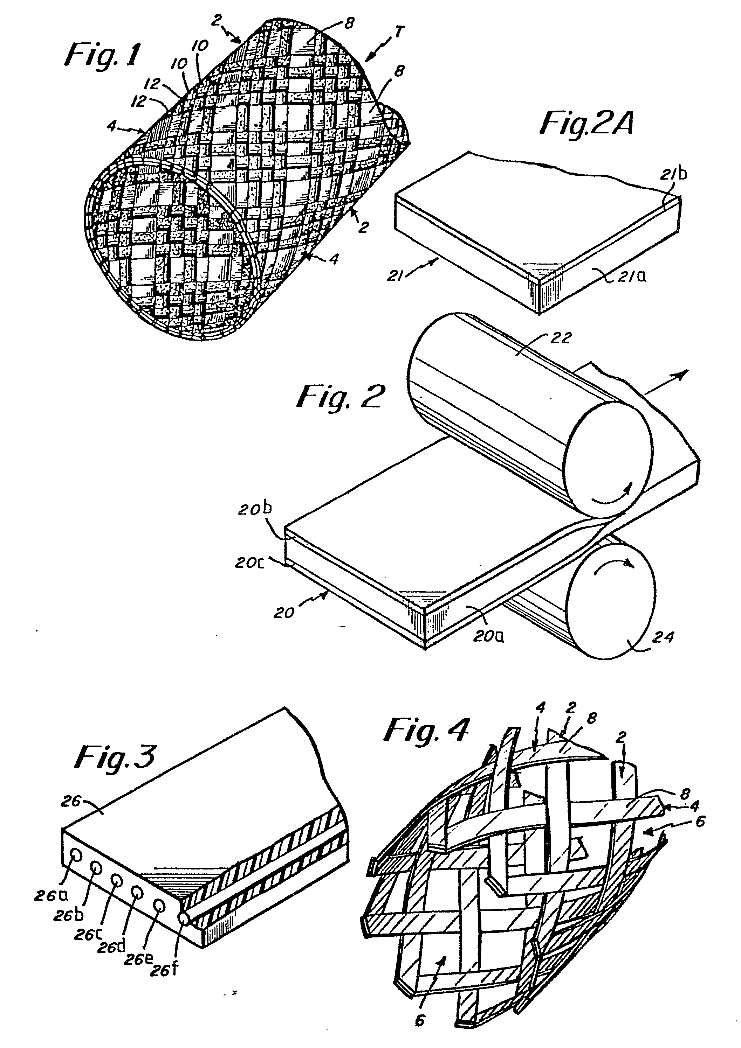

The tubular bodies and their methods of formation utilizing braiding, cartridge-belt weaving or other texturing techniques as disclosed in Figures 1-26 have evolved from the general objectives earlier noted of dealing with the variables inherent in the operation of positive plates for lead-acid batteries. In seeking to optimize combinations of materials useful for such purposes there has been developed a concept of texturing based upon arranging fabrication components in the form of sets of flat thermoplastic tapes into an open latticework of grating-like configuration throughout which spaced rows of openings may extend in angularly disposed relation to one another in a controlled manner.

Combined with this open latticework are differing sets of fabrication components, for example, glass fibers, polyester fibers and mixtures of the same, extending across and through the spaced rows of openings in the latticework along intertwinding paths of sinuosity to substantially fill or close the rows of openings. These paths of sinuosity intersect one another in a manner such that overlapping tape portions, even prior to fusion integration, are locked into relatively fixed patterns highly resistant to forces of deformation such as those engendered by stretching, twisting, expanding and the like.

It is contemplated that use of a latticework of reinforced thermoplastic tapes in which is interbraided foraminous material provides a textured product which may be referred to as a composite tubular body of a seamless single-wall construction and may be useful for various purposes in the structural state described above where no fusing has taken place. This composite tubular body and its method of fabrication is illustrated in Figures 1-7. It should be understood, however, that the latticework of reinforced tapes is not limited to a composite single-wall tube and may be employed in various ways as illustrated in the remaining figures of the drawings to form multi-wall structures of a desirable nature.

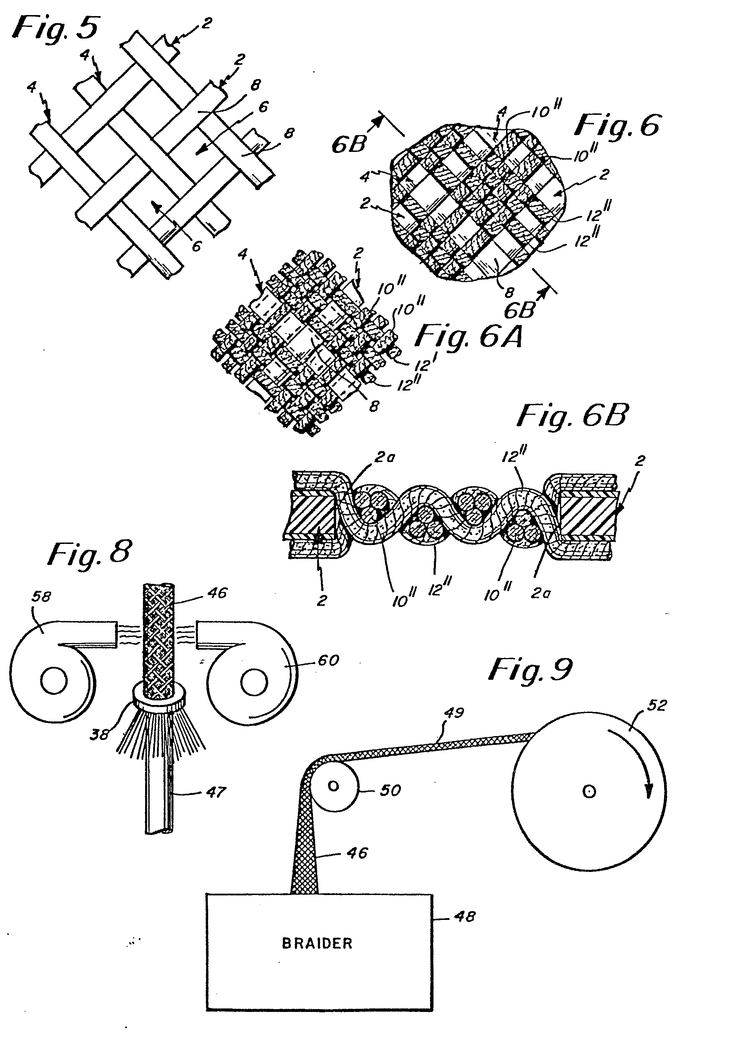

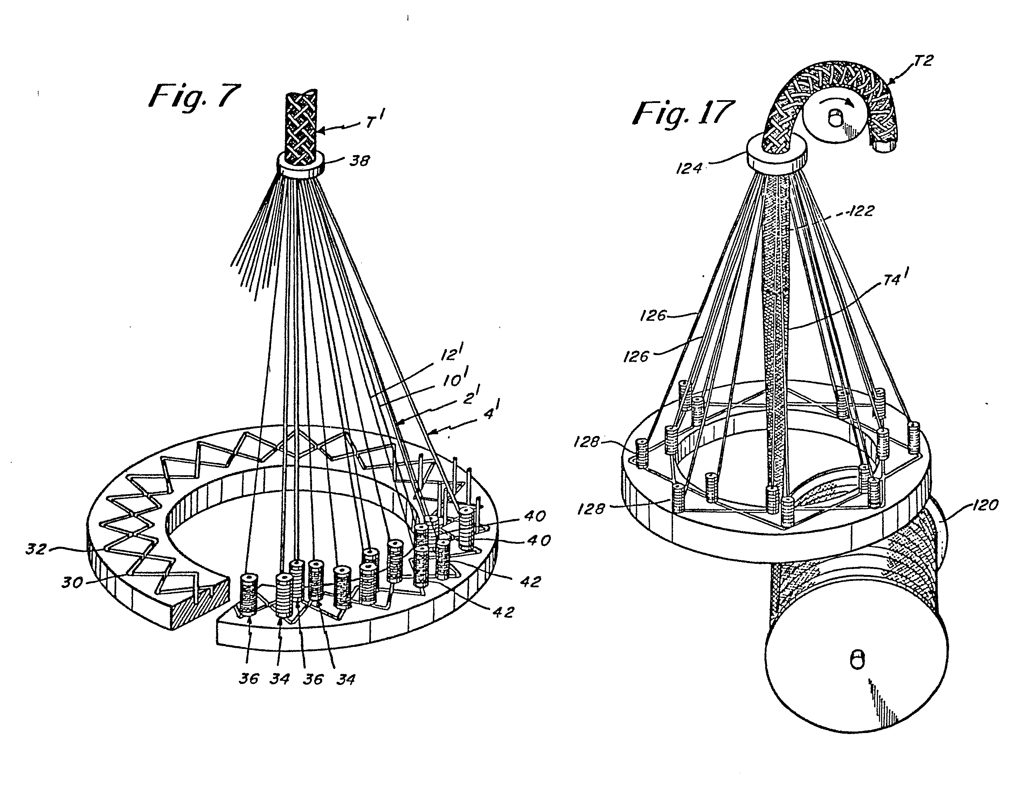

Referring in more detail to Figures 1-7, there is illustrated in Figure 1 a preferred form of braided seamless tubular body of composite type generally denoted by the arrow T. Included in this seamless tubular body T, in accordance with the invention, are two sets of fabrication components. The first set consists of reinforced thermoplastic tapes generally denoted by arrows as 2 and oppositely directed tapes generally denoted by arrows as 4, which are more clearly shown in Figures 4 and 5. As will be noted therein, the reinforced thermoplastic tapes are arranged in uniformly spaced relation and extend in oppositely directed helical paths to define a seamless tubular latticework having openings as denoted by arrows as 6, shown also in detail in Figures 4 and 5. It will also be noted that at spaced apart points portions of the tapes overlap one another as shown by numerals as 8.

It should further be observed that the openings as 6 are quadrilaterial in configuration thus minimizing undesirable gas polorization.

Further, in accordance with the method of the invention, there is utilized a second set of angularly disposed fabrication components, indicated by arrows as 10 and 12, which are of a foraminous nature and which may consist, for example, of staple fiber such as glass, polyester or mixtures thereof which may be formed into twisted bodies as shown in Figure 6. The two sets of fabrication components are combined together in a specially controlled single braiding operation as is illustrated in Figure 7 to produce the composite textured tubular body of Figure 1. Control of the braiding operation will be described below.

An important feature of the first set of thermoplastic tapes employed in the latticework is the inclusion of reinforcement means such as shown in Figures 2, 2A and 3. In the case of Figure 2, the tape may be denoted by arrow 20 and is of a laminated construction consisting of an inner reinforcing layer 20a of a polyester compound, for example, and fusible outer layers 20b and 20c of a thermoplastic material chemically inert in the electrolyte of a lead-acid battery, for example, a polyolefin such as polyethylene or polypropylene. It may also be desired to provide means for covering exposed edges of the reinforcing components 20a with overlying thermoplastic outer layers. As shown in Figure 2, there may be employed rollers 22 and 24, shaped as shown, to compress edges of the layers 20b and 20c over against one another as suggested at the upper right hand end of the tape structure. The polyester component 20a may be pre-stretched to orient the molecules of the polyester in a longitudinally directed manner.

It may be desired to provide a laminated tape in which one of the thermoplastic layers is omitted. Such a tape is illustrated in Figure 2A and generally denoted by arrow 21. Here a polyester layer 21a has laminated to one side thereof a layer 21b of a thermoplastic material such as a polyolefin. The utility of this arrangement will be discussed below.

Other materials may be used in the laminated tapes of Figure 2 and Figure 2A. For example, oriented polypropylene may be substituted for the polyester layer 20a or 21a (Figure 2 and Figure 2A), the only requirement being that the fusible outer layers as 20c, 20b and 21b have a lower softening temperature than 20a or 21a.

In Figure 3 another desirable form of reinforced thermoplastic tape has been illustrated and includes a fusible thermoplastic tape body 26 having included therein filaments spaced apart as indicated at 26a, 26b, 26c, etc. and extended longitudinally of the tape. The filaments may be glass, polyester, a mixture of the two, or the like; advantages of glass include resistance to elongation, while advantages of polyester include high tensile strength.

The method of texturing which has been devised to produce the composite tubular body of Figure 1 is based on the concept of locating spools of thermoplastic tape in a braiding machine and also in suitably positioning other spools of glass fibers or other foraminous material in varying forms. This relative positioning of fabrication components has been illustrated diagrammatically in Figure 7, with it being kept in mind that changes in degree of porosity may be varied quite sharply by controlling the dimensional relationship between the pores or spaces 6 and the total surface area of the textured tubular body of Figure 1.

The above relationship may be controlled by proper selection of various texturing parameters such as spaced relationships of the tapes, the number of tapes, the width of the tapes, etc. These parameters may be expressed and determined mathematically; disclosure of these procedures will be set forth hereinafter with respect to the description of Figure 27.

Figure 7 illustrates schematically a tubular braiding machine arranged to produce a composite tube T' similar to that shown as T in Figure 1. In this type of machine there are two groups of feed spools and, customarily, in such machines there are provided means for travelling each of the spools within an annular area. One group of spindles, generally denoted by arrows as 34, travels in a clockwise direction as viewed in Figure 7 along a path indicated by numeral 30. Another group, generally denoted by arrows as 36, travels in a counter-clockwise direction along a path indicated by numeral 32, each spool following its respective intersecting path of travel. Material is drawn from the feed spools into a common forming ring 38 from which the braided tube T' emerges. The components of the braid follow opposed helical paths around the central axis of the tube.

Certain of the spools as 40 will be loaded with reinforced thermoplastic tapes indicated by arrows as 2' and 4'. Other spools as 42 will be loaded with staple fibers as 10' and 12'. If tapes as 2' and 4' are sufficiently wide so as to overlie staple fibers fed from spools adjacent to the spools as 40 when in the braided tube T', said adjacent spools may be left empty to eliminate wastage of staple fiber. Staple fibers as 10' and 12' are introduced between the tapes in interbraided relationship. Selection of various braiding parameters, for example, tape width, rate of feed, number of tapes, etc. to produce optimal tube characteristics with respect to porosity, degree of interlocking between the sets of components, etc. will be discussed at a later time with respect to Figure 27.

The textured tubular body of Figure 1 as it is braided in the manner described and illustrated in Figure 7 occurs in a continuous length of material which may be processed in various ways as earlier noted in the abstract.

Figure 6 is a portion of the tubular body of Figure 1 somewhat enlarged in which the interbraided relationship between the tapes as 2 and 4 and foraminous components similar to 10 and 12 of Figure 1 is illustrated. In this Figure 6 foraminous components as 10'' and 12'' are shown as twisted yarns comprising a plurality of fibers. Figure 6B is a portion of this structure still further enlarged and shown in cross-section, illustrating edges as 2a of spaced apart tape components as arrows 2, for example, effectively compacting therebetween the staple fiber yarns as 10'' and 12'', which in turn capture and confine overlapping portions as 8 of the tape components as shown in Figure 6. This relationship of components is shown in plan view in Figure 6A still further illustrating the overlapping parts of the tapes as indicated at 8.

In thus capturing and confining the overlapping portions 8 throughout the tubular body all of the overlapping portions as 8 and the foraminous components are maintained in a desirably fixed relationship which tends to resist displacement. It will be evident from the interbraided relationship of the various components that each of the foraminous components will assume a sinuosity characteristic forced upon it by the undulating nature of the braid thus enhancing the resistance to deformation of the tubular body.

One preferred method of further processing is illustrated in Figure 9. This figure shows a step of guiding braided tube 46 as it leaves a braiding machine 48 in a tubular form upwardly over a guide 50 which collapses the braided tube into a flattened shape, indicated by numeral 49, which may in turn be wound on a storage reel 52. The wound reel 52 in some desired size is then ready to be stored for future use of may be packaged for shipment to a required destination.

When braided tubing is packaged and shipped on reels in the flattened form described, significant economic advantages are realized. Since the volume of the collapsed tubing will be significantly less than that of uncollapsed tubing, shipping costs (which are based upon volume as well as upon weight) for a given length of tubing will be markedly less. In addition, space required for storage of tubing will be reduced, again producing considerable monetary savings.

In the method described above no fusing of thermoplastic material need take place at the time of braiding, collapsing and winding on reels. However, if desired, the material may undergo a partial "tack", i.e. surface, fusion as is suggested by Figure 8 in which braiding takes place over a mandrel 47 and, subsequently, the braided material 46 is exposed to heating means such as the hot air blowers 58 and 60 after the material leaves the common forming ring 38. Hot air blowers 58 and 60 produce partial softening of the thermoplastic material 20b and 20c (Figure 2) of the tapes so that these surfaces become adhered to one another.

In such a partial fusing operation it may be desired to provide mandrel 47 with a surface of a non-sticking material as Teflon Trade Mark. However, if a laminated tape of the form shown in Figure 2A is employed and positioned such that polyester layer 21a is located against mandrel 47, the mandrel need not have a non-sticking surface characteristic.

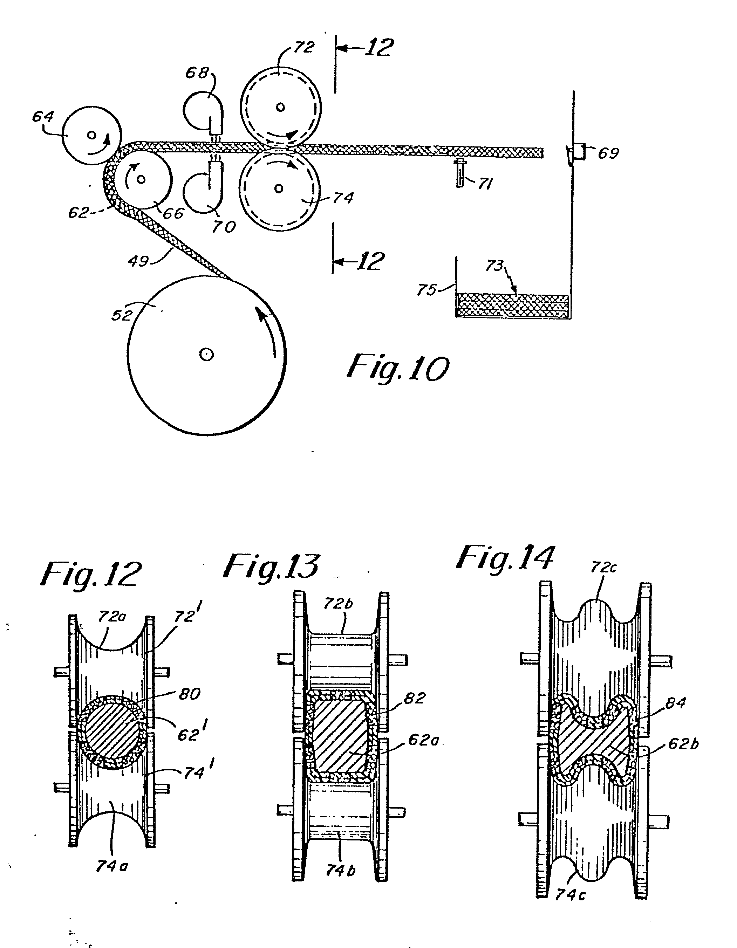

Further processing may take place as illustrated in Figure 10. Collapsed tubing 49 is fed from wound reel 52 (reference Figure 9) onto a forming mandrel 62, drawn by drive rolls 64 and 66. The mandrel 62 may be of some desired cross-section, for example circular, rectangular, etc.

As the collapsed tube becomes expanded in passing over the mandrel 62, as shown in Figure 10, it is contained between friction drive wheels 64 and 66 which advance the expanded tube along a path passing between heating elements 68 and 70 which heat the thermoplastic material to a desired range of temperatures for fusion integration, which range is well known in the art. The heated tubing then passes between pressure rollers 72 and 74 which provide pressure required for fusion integration of tape components and embedding of staple fibers into thermoplastic surfaces of the tape components; the tubing then is advanced until it comes into contact with a limit switch 69 which triggers a cutting device 71. Cut lengths, as denoted by arrow 73, are then received in a receptacle 75.

Cooling of the tubing, which finally fixes the fusion integration and embedding of components, takes place during and following the application of pressure; for this reason it may be desirable to provide mandrel 62 and portions of pressure rollers 72 and 74 with non-sticking surfaces. Heat, pressure, and cooling may be provided by other forms of apparatus without departing from the method of the invention.

Figures 11A-11D illustrate diagrammatically fusion integration of thermoplastic tapes with one another as well as fusion embedding of staple fibers in the thermoplastic surfaces of the tapes. Referring to Figure 11A, arrow 90 indicates a reinforced thermoplastic tape of the invention having, for example, a center core 90a of polyester and outer layers 90b and 90c of polyolefin (e.g. polyethylene or polypropylene) shown in longitudinal cross-section. Arrow 92 indicates an angularly disposed thermoplastic tape having a similar core 92a and outer layers 92b and 92c. Arrows as 94 indicate staple fibers. The various components cited are shown in unfused relationship.

Figure 11B illustrates these same components after they have been subjected to the fusing and shaping process of Figure 10. Thermoplastic tape 90 now evidences a sinuous configuration forced upon it by the pressure from rollers 72 and 74. Staple fibers as 94 become embedded into thermoplastic surfaces 90b and 90c to an extent limited by the central polyester core 90a. Portions as 92b of tapes as 92 become fused with portions 90b and 90c of tape 90 such that the thermoplastic surface 92b becomes fusion integrated into a single mass with the thermoplastic surface 90b (or 90c) of tape 90 by the combination of heat and pressure as suggested in Figure 10.

Tapes such as shown in Figure 2A may be similarly employed; in this case polyester cores of the tapes become fusion embedded in the thermoplastic layers of other sets of tapes.

Figure 11C is a view very similar to that of Figure 11A, except that the tapes as 90', 92' are reinforced by internally disposed filaments as 90d, 92d and 92e. These filaments may be formed of glass fibers (90d, 92d), polyester (92e), or mixtures thereof. Fusion integration and embedding take place as before; the depth of embedding of fibers as 94 is limited by the reinforcing filaments 90d, 92d and 92e. The resulting fused relationship of parts is shown in Figure 11D.

In addition to providing fusion integration, pressure rollers 72 and 74, in combination with mandrel 62, also provide shaping of the tubing to a final desired cross-sectional configuration.

Figure 12 illustrates pressure roller and mandrel apparatus similar to that shown in Figure 10 for fusing and forming a circular tube 80. Shaping surfaces 72a and 74a of pressure rollers 72' and 74' are circularly recessed and compress the tube 80 over a mandrel 62' of a circular cross-section.

Figure 13 illustrates apparatus for forming a rectangular tube 82 in which the shaping surfaces 72b and 74b of rollers similar to 72 and 74 are rectangularly recessed and mandrel 62a is of a corresponding rectangular cross-section.

Figure 14 illustrates apparatus similar to that of Figure 12 and Figure 13 for producing another tube shape 84. Mandrel 62b and shaping surfaces 72c and 74c of rollers similar to 72 and 74 will be of a suitable configuration.

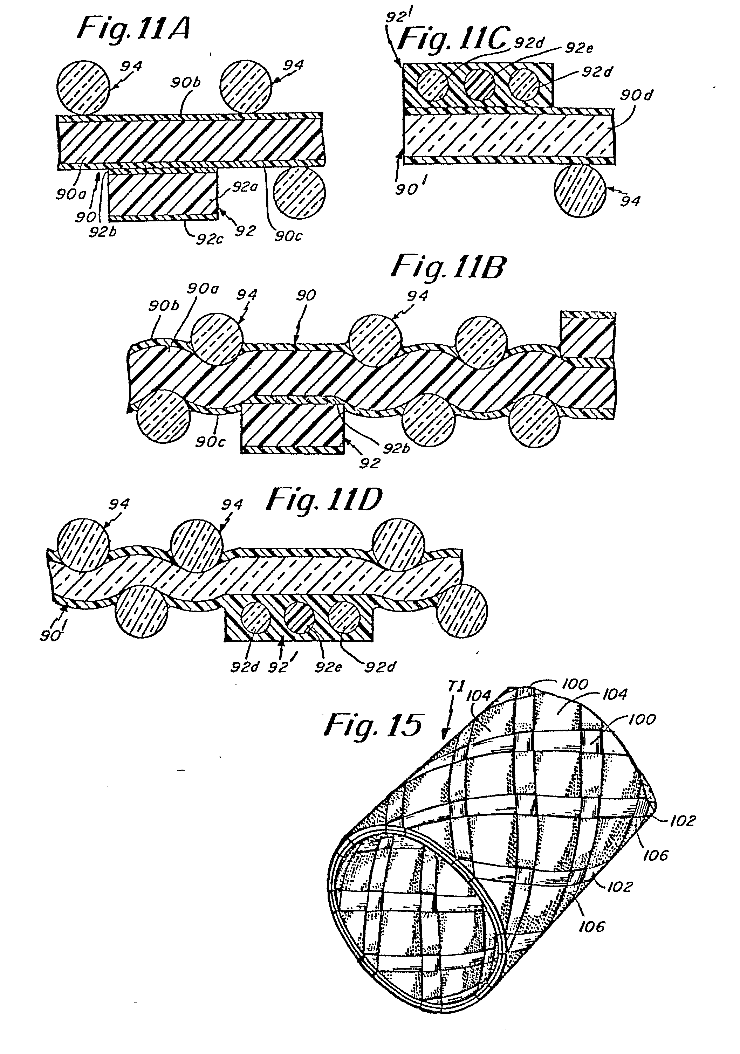

Figure 15 illustrates another embodiment of the composite tube of the invention, in which staple fibers are replaced by strips of non-woven foraminous material. In this Figure a tube designated by arrow T1 comprises a helical lattice of angularly disposed reinforced thermoplastic tapes as 100, 102 interbraided with angularly disposed strips as 104, 106 of a non-woven foraminous material.

As in the previous arrangement, the foraminous material is interbraided with the reinforced thermoplastic tapes of the helical latticework. Fusing, embedding and shaping takes place in the manner described in connection with earlier Figures.

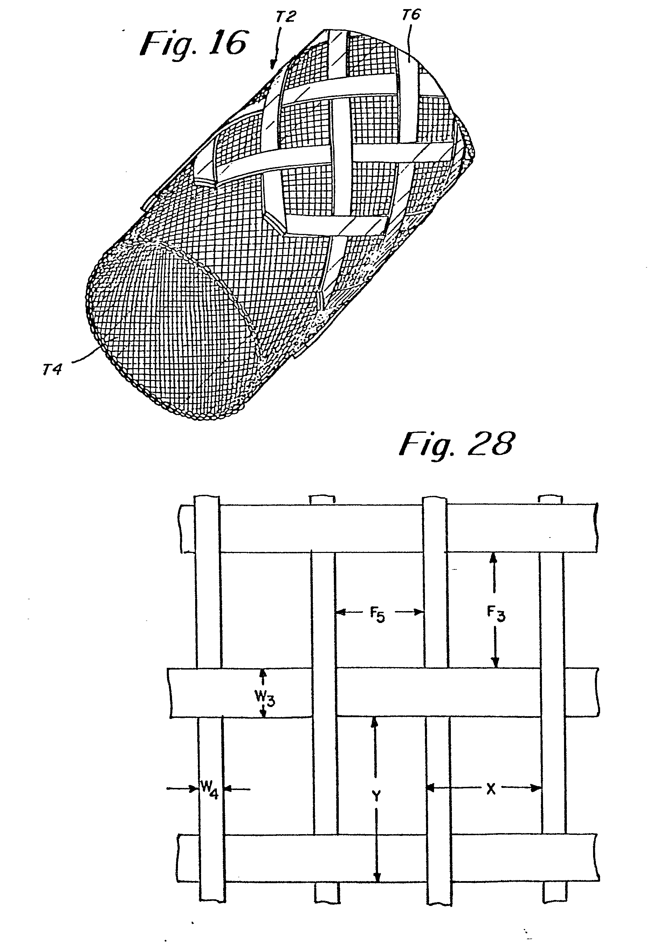

Another embodiment of the invention comprises a double-walled tubular structure earlier noted and similar to that shown in Figure 16. In this Figure, arrow T2 refers to a double-walled tube comprising an inner tube portion T4, braided in a conventional manner from staple fiber, over which is braided in accordance with the invention a seamless tubular helical latticework T6 similar to that illustrated in Figure 4.

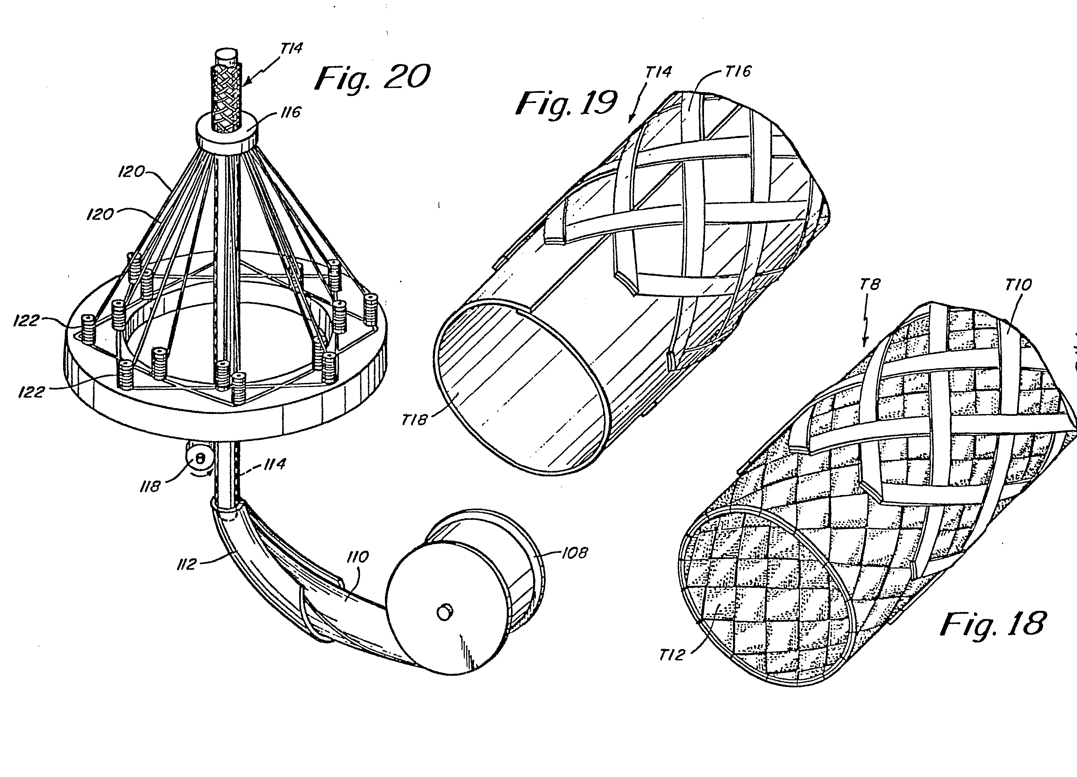

The tube T2 of Figure 16 may, for example, be fabricated using a braiding technique as illustrated in Figure 17. In this Figure the braided fiber inner tube portion T4' has been previously produced in a continuous length and rolled into flattened form on a reel 120. The tube portion T4' in collapsed form is threaded over a mandrel 122 and then drawn through a forming ring 124.

Tapes as 126 are fed from spools as 128 in the previously described manner, and are braided over tube portion T4' to provide the double-walled structure arrow T2. Control of porosity, strength, etc. is accomplished by regulating the braiding parameters associated with forming the latticework T6. As will be obvious to one skilled in the braiding art, inner and outer tube portions may be braided simultaneously using a "2-deck" machine (not illustrated in the drawing). It may also be desired to heat the double-walled tube of Figure 16 in a manner similar to that illustrated in Figure 8 so that a "tack" fusing takes place particularly when the double-walled product is to be wound into a reel for storage and shipment.

The double-walled structure T2 of Figure 16 may be fusion integrated and shaped to a desired configuration in a manner similar to that previously described.

Figure 18 illustrates another form of double-walled tube denoted by the arrow T8 in which an outer latticework T10 similar to that shown in Figure 4 is braided from thermoplastic tapes over braided inner tube portion T12 comprising strips of non-woven foraminous material similar to 104 and 106 of Figure 15.

Figure 19 illustrates yet another embodiment of double-walled tube structure, denoted by arrow T14, in which is combined a latticework T16 of reinforced thermoplastic tape similar to that shown in Figure 4, braided over lapped inner tube portion T18 formed from a sheet of foraminous material.

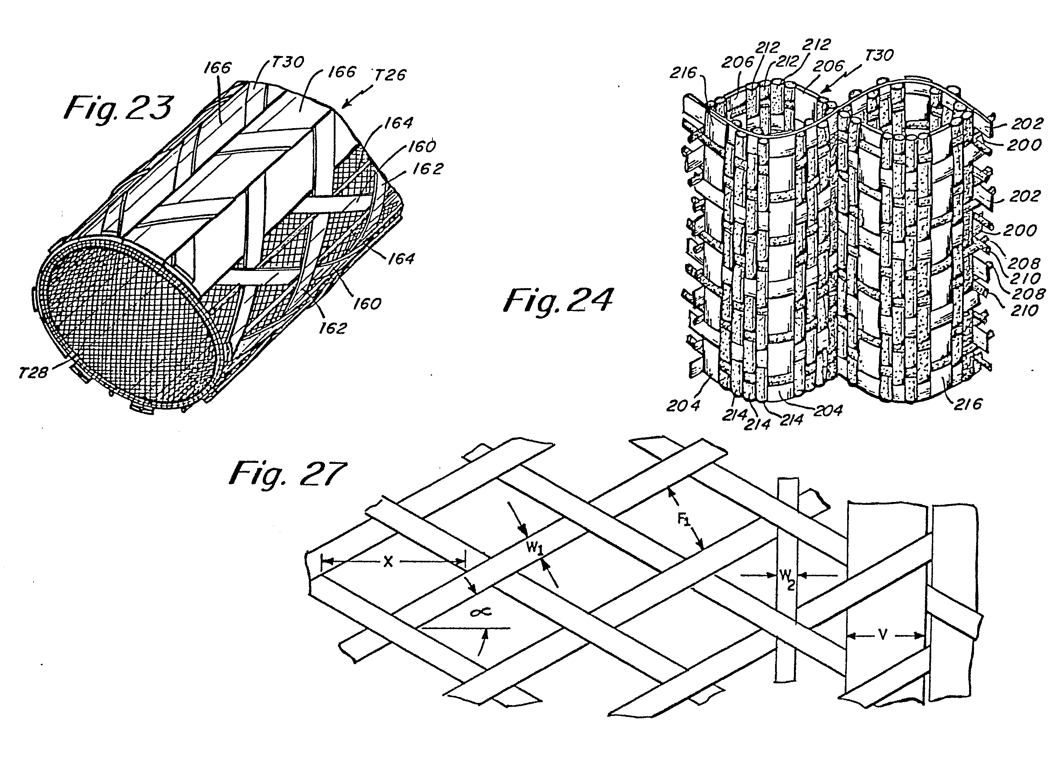

Figure 20 illustrates schematically a means of producing the tube of Figure 19. Referring in detail to Figure 20, numeral 108 denotes a reel upon which is wound a continuous strip 110 of foraminous material, e.g. non-woven polyester.

Sheet material 110 is introduced into forming means 112 and threaded over a mandrel 114, and thereafter advanced through common forming ring 116 by friction drive wheel 118. Tapes as 120 are fed from spools as 122 and braided over the formed inner tube portion to provide a double-walled structure T14, as illustrated in Figure 19.

It may be desired in some cases, particularly with respect to double-walled tube structures, to treat the tape latticework so that it may not be axially stretched or elongated during the braiding process. This can be accomplished by the inclusion of axially disposed tapes within the braided latticework.

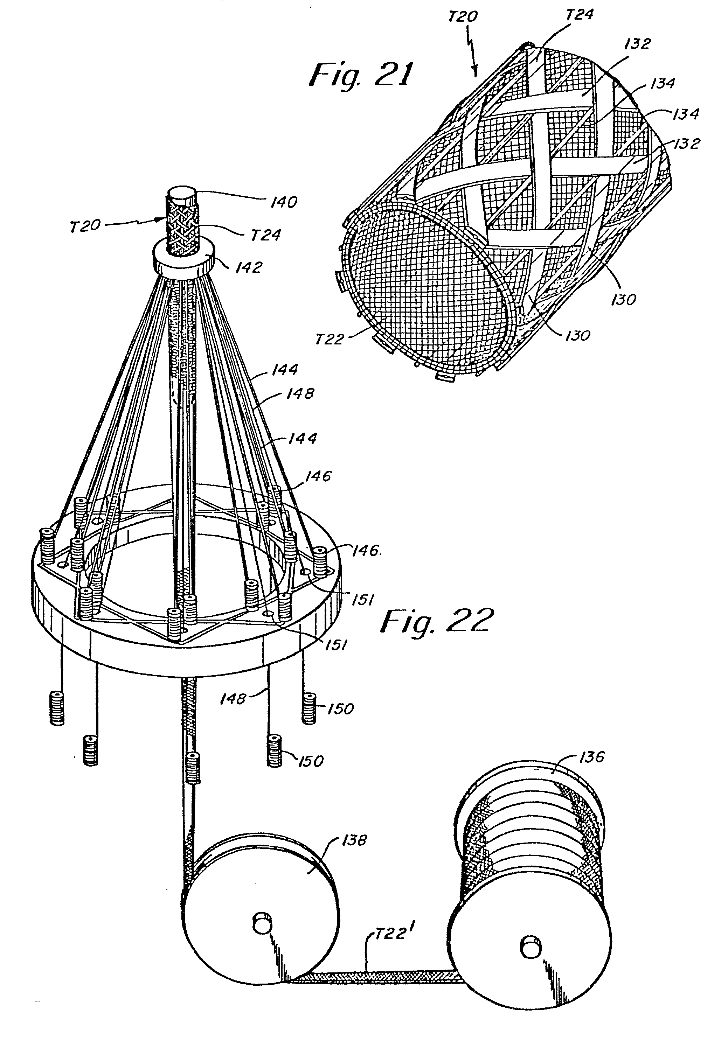

Figure 21 illustrates a double-walled tube denoted by arrow T20 (similar to tube T2 of Figure 16) in which an inner tube portion T22 braided from staple fiber is surrounded by a braided tape latticework T24 comprising helically disposed tapes as 130 and 132 and axially disposed tapes as 134.

Figure 22 illustrates diagrammatically a method of producing the tube of Figure 21. It will be noted that the apparatus illustrated is very similar to that shown in Figure 17. Braided inner tube portions T22' are fed from a reel 136 in collapsed form over a guide roll 138, threaded over mandrel 140 and forced through common forming ring 142.

Helically oriented tapes as 144 are fed from spools as 146 in the same manner as described in connection with earlier figures. Axially disposed tapes as 148 are fed from stationary spools as 150 through holes as 151 and into the common forming ring 142 and interbraided with tapes as 144 to produce the outer tube portion T24 (Figure 21). The resulting tube T20 may be fusion integrated and processed as previously described.

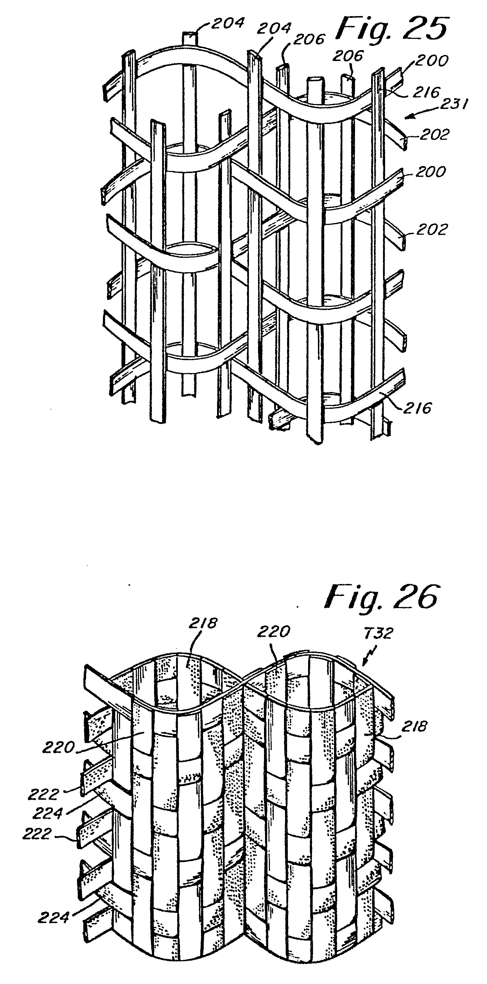

It may be desired to provide tubes for special purposes in which the tube is not porous for a portion of its outer periphery. Such a tube, commonly used as "end tubes" of positive plates, may be fabricated using the means and method similar to those described in connection with Figure 22. Figure 23 illustrates such a tube, denoted by the arrow T26, comprising an inner tube T28 braided from staple fiber over which is braided a latticework T30 comprising helically disposed tapes as 160, 162, axially disposed tapes as 164 and axial masking tapes as 166. The tube T26 may be produced in the apparatus shown in Figure 22, the only difference being that some of the stationary spools as 150 will be loaded with wider tapes as 166. The width of tapes 166 is selected of a size such that they substantially abut one another and provide a masking function.

A similar masking function may be provided in single-wall tubes similar to those shown in Figures 1-15, by employing a method similar to that shown in Figure 20. A continuous strip of laminated thermoplastic material of the composite form of Figure 2A, having a width equivalent to that peripheral portion of the composite in which masking is desired, is introduced into forming means, advanced over a mandrel with its polyester surface against the mandrel, and thereafter advanced through a common forming ring. A composite tubular body, similar to those shown in Figures 1-15, is then braided over the formed strip. Fusion integration, shaping, etc. are carried out as before.

All of the advantages and desirable features of single-walled tubes which have been illustrated in Figures 1-15 may be realized to a very large extent in multi-tube structures of the class commonly referred to as cartridge-belt loom woven tubes. Figures 24-26 illustrate such structures.

Arrow T30 (Figure 24) illustrates such a structure woven from a plurality of sets of thermoplastic tapes and staple fibers. The plurality of sets includes four distinct sets of thermoplastic tapes as 200, 202, 204, 206 as shown in Figure 25; four sets of staple fibers, as 208, 210, 212, 214, are interwoven as shown in Figure 24. The interwoven tape structure is illustrated as arrow 231 in Figure 25.

As is customary in weaving with a cartridge-belt type loom, a series of interconnected tubular sections is continuously produced with the central axis of each section being normal to the path of advancement of the interconnected tubular sections. The series may be of any desired length and may be wound on a storage reel from which there may be drawn off any required number of tubular sections. Thereafter the required number of sections may be separated and fused at their points of separation. Following fusion and separation, it is then desirable that overlapping tape portions as 216 in each tubular section be fusion integrated with one another and that staple fibers as 208, 210, 212, 214 become embedded in the surfaces of the tapes as 200, 202, 204, 206 as disclosed above.

This may be accomplished by providing an array of spaced apart mandrels, heating means and pressure rollers (not shown in the drawings).

Figure 22 illustrates a modification of a multi-tube structure similar to that of Figure 24, in which the staple fibers of the weave are replaced by strips of foraminous material, e.g. non-woven polyester, as denoted by numerals as 218, 220, 222, 224.

As previously noted braiding or weaving parameters for all of the embodiments now described may be derived and calculated mathematically. For braided bodies of the single-tube class having no axially disposed tapes (Figures 1-14), the variables or parameters include:

d = desired tube diameter

n = number of helically disposed tapes either in a clockwise or a counter-clockwise direction (must be an integer).

$P_1$ = porosity of foraminous material (to be established by conventional methods).

$P_2$ = porosity of the tape latticework defined as the ratio between the openings in the latticework and the total surface area of the tubular body.

$P_3$ = total porosity of the tube wall.

$W_1$ = width of individual helically disposed tapes (see Figure 27).

z = the number of crossovers of center lines of helically disposed tapes per unit of tube length (related to rate-of-advance of the braided tubular body).

x = edge-to-edge distance between parallel helically disposed tapes, in a plane normal to the central axis of the tube (see Figure 27).

$F_1$ = edge-to-edge distance between parallel helically disposed tapes, in a plane normal to the central axis of the tapes (see Figure 27).

$F_2$ = width of individual foraminous components.

$\propto$ = angle between helically disposed tapes and the normal to the central axis of the tube.

m = number of foraminous components confined between adjacent parallel helically disposed tapes.

Mathematical relationships include:

$$P_2 = P_3/P_1$$

$$Z = 1/((\pi \cdot d/n) \cdot \tan \propto)$$

$$W_1 = \sin \propto (\pi \cdot d/n) (1 - \sqrt{P_2})$$

$$P_2 = \frac{((\pi d/n) - (W_1/\sin \propto)) ((\pi d/n) \tan \propto - (W_1/\cos \propto)}{(\pi d/n)^2 \tan \propto}$$

$$X = (\pi d/n) - (W_1/\sin\alpha)$$

$$F_1 = X \sin\alpha$$

$$F_2 = F_1/m$$

Customarily certain of the variables will be defined by the desired characteristic of the tubular body, as follows:-

$$d$$

$$P_1$$

$$P_3$$

The remaining variables can be calculated from the relationship above, bearing in mind that multiple solutions may be possible. It may, for example, be desired to specify as well the angle $\alpha$ which is related to the strength of the tube, and "n", which may be dictated by the configuration of the braiding machine.

Given the above variables ($d$, $P_1$, $P_3$, $\alpha$, $n$) porosity $P_2$ may be readily calculated; width $W_1$, distance $X$, $Z$ and $F_1$ readily follow. Parameter "m" will also normally be predefined; width $F_2$ may also be readily calculated. If other variables are specified the relationship may be manipulated algebraically to determine values for the unspecified variables.

When axially disposed tapes are to be employed for masking purposes, the width $V$ of such masking tapes (see Figure 27) may be calculated by the relationship

$$V = \frac{\pi d}{2n}$$

Where axially disposed tapes are to be included in the braid for strengthening purposes (see Figure 21), the width $W_2$ of such axially disposed tapes (see Figure 27) will normally be specified with reference to the strength desired.

Where $W_2$ is less than or equal to

$$\frac{W_1}{\sin\alpha}$$

porosity $P_1$ may be calculated by

$$P_2 = \frac{\left[ ((\pi d/n) - W_2 - (W_1/\sin\alpha)) (((\pi d/n) - W_2) \tan\alpha - W_1/\cos\alpha)) \right]}{(\pi d/n)^2 \tan\alpha}$$

Where $W_2$ is greater than

$$\frac{W_1}{\sin\alpha}$$

porosity $P_2$ may be calculated by the relationship

$$P_2 = \left[ \tfrac{1}{2} ((\pi d/n) - W_2 - (W_1/\sin\alpha))(((\pi d/n) - W_2) \tan\alpha - (W_1/\cos\alpha)) - 2 (W_2 - (W_1/\sin\alpha))^2 \tan\alpha \right] / \left[ \tfrac{1}{2} (\pi d/n)^2 \tan\alpha \right]$$

Optimization of width $W_1$ will be carried out in an iterative solution of the above relationships.

Multi-tube structures woven in a cartridge-belt loom will be calculated in a somewhat different manner.

Variables include:

d = tube diameter

$n_1$ = number of horizontally disposed tapes in a single-tube wall

$n_2$ = number of vertically disposed tapes in one-half of an indicated tube section

$P_1$ = porosity of foraminous material

$P_2$ = porosity of the tape structure (see Figure 25)

$P_3$ = desired porosity of the tube wall

$W_3$ = width of horizontally disposed tapes (see Figure 28)

$W_4$ = width of vertically disposed tapes (see Figure 28)

$X$ = center-to-center distance between vertically disposed tapes as 206 (see Figures 25 and 28)

$Y$ = center-to-center distance between horizontally disposed tapes as 202 of Figure 25 (see Figure 28)

$F_3$ = edge-to-edge distance between horizontally disposed tapes (see Figure 28)

$F_4$ = width of individual horizontally disposed foraminous components

$F_5$ = edge-to-edge distance between vertically disposed tapes (see Figure 28)

$F_6$ = width of individual vertically disposed foraminous components

$m_2$ = number of horizontally disposed foraminous components captured between edges of horizontally disposed tapes

$m_3$ = number of vertically disposed foraminous components captured between edges of vertically disposed tapes

Relationships between the variables include:

$$X = \frac{(\pi d/2)}{n_2}$$

$$P_2 = P_3/P_1 = (X - W_4)(Y - W_3) / X Y$$

$$n_1 = 1/Y$$

$$n_2 = F_3/F_5$$

$$m_3 = F_4/F_6$$

For the braided tubes of Figures 1-23, selection of the angle $\alpha$ (see Figure 27) will have a bearing upon the strength of the thermoplastic latticework. For angles above $45^\circ$, strength

in a longitudinal or axial direction will be enhanced more substantially than will strength in a radial direction, i.e. "burst resistance". Angles below $45^{\circ}$ will enhance burst resistance as versus longitudinal or axial strength. As angle $\alpha$ is decreased below $45^{\circ}$, an increased radial pressure may be exerted upon active material contained within the tubular body. This may be explained by the fact that active material, as it expands, will tend to impress itself between the tapes, staple fibers, etc., thus exerting maximum friction against these components.

Since the angle $\alpha$ is small, restrictive force against radial expansion may be greater than restrictive force against axial expansion, thus the majority of expansion may take place in the axial direction. Since friction between the active material and components of the braided tubular body may be relatively high, these components may tend to be carried with the active material as it expands in an axial direction, thus exerting forces which will tend to attempt to increase angle $\alpha$. As a result, the braided tubular body may tend to decrease slightly in diameter, providing an increased resistance against radial expansion.

For the above reasons it may be advantageous to specify $\alpha$ as being somewhat less than $45^{\circ}$.

The following is offered as a numerical example of the calculation method described above.

It is desired to produce a single-walled composite tubular body, similar to that illustrated in Figure 1, having a diameter of 9.5 mm and a porosity comparable to an existing double-walled tube having a "perforation ratio", $(P_2)$, i.e. a ratio between the perforations of an outer PVC wall and the total surface area of the tube, of 0.54, i.e. 54%. For strength purposes, angle $\alpha$ is specified as $30^\circ$.

To provide a maximum amount of interbraiding between tapes and foraminous components, it is desired to provide an even integral number "m" of foraminous components between adjacent and parallel tapes. This number will be selected as 6.

The number of tapes "n" must be an integer; the number of foraminous components "m" between adjacent parallel tapes, plus one (representing the tape) must be integrally divisible into the number of clockwise (or counterclockwise) travelling spools on an available braiding machine. Machines available at this time have 56, 64 and 72 spools, (i.e. 28, 32 and 36 clockwise travelling spools respectively).

The only machine which meets the above stated criteria is the 56-spool machine, where

$$\frac{56/2}{(m+1)} = \frac{28}{n} = 4$$

Therefore the number of tapes "n" will be selected as 4, and

$$W_1 = \operatorname{Sin} \alpha \, (P_1 d/n) \, (1 - \sqrt{P_2}) = 0.99 \text{ mm}$$

$$Z = 1/(\pi\, d/n\, \tan \alpha)$$

$$= 1/\frac{(3.1416)(9.5)}{4}\ (.57735)\ =\ 0.232\ mm^{-1}$$

which may be related to the rate of advance of the braided tubular body.

$$X \text{ (see Figure 27)} = \frac{(\pi\, d)}{n} - \frac{W_1}{\sin \alpha} = 5.5\ mm$$

$$F_1 \text{ (see Figure 27)} = X \sin \alpha = 2.75\ mm$$

and width (or diameter) of the foraminous material

$$F_2 = F_1/m = \frac{2.75}{6} = 0.46\ mm$$

It is determined that the above width $F_2$ (equal to the diameter of a single staple fibre yarn) is excessively small, therefore the number "m" may be reduced by 2 to "m" = 4.

Then $F_2 = \frac{2.75}{4} = 0.69$ mm which is acceptable; spools adjacent to tape-loaded spools on either side thereof will be left empty.

- 1 -

Claims:

1.  A textured tubular body for use in a tubular storage battery plate, characterised by latticework of spaced apart reinforced tapes interwoven to define interrupted rows of spaces and control the porosity of the tubular body, and a foraminous material consisting of means for retaining active material arranged to close the interrupted rows of spaces in the latticework.

2.  A tubular body as claimed in Claim 1, characterised in that the latticework is a seamless helical latticework of spaced apart tapes of a thermoplastic material having reinforcing means included therein, which tapes are interbraided to define interrupted rows of spaces, and the means for retaining active material is a network of foraminous material braided into the latticework between edges of the tapes to fill the rows of spaces along paths of sinuosity which occur in angularly disposed relation to one another.

3.  A tubular body as claimed in Claim 2, characterised in that the foraminous material comprises fibres and the network of fibers of foraminous material defines openings in which adjacent tape portions which overlap one another are confined to maintain the tape components and the network components in relatively fixed relationship to one another throughout the tubular body.

4. A tubular body as claimed in Claim 2 or Claim 3, characterised in that the paths of sinuosity of the network of foraminous material extend above and below the tapes in an alternating manner.

5. A tubular body as claimed in any one of Claims 2 to 4, characterised in that the thermoplastic material of the tapes is responsive to heat and pressure to fusion integrate the said tape portions which overlap one another and to receive portions of the said network of foraminous material in embedded relationship with tape portions which do not overlap one another.

6. A tubular body as claimed in Claim 5, characterised in that, when the foraminous material comprises fibres, the reinforcing means of the thermoplastic tapes are arranged to limit the extent of embedding of the fibers in tape surfaces.

7. A tubular body according to any one of Claims 2 to 6, characterised in that the thermoplastic tapes consist of a polyolefin and the polyolefin is reinforced by the inclusion of stronger materials having a higher softening temperature than that of the polyolefin.

8. A tubular body as claimed in Claim 7, characterised in that the tapes are laminated with a central core of a polyester and outer layers of a polyolefin.

9. A tubular body as claimed in Claim 8, characterised in that the central core is a polypropylene having its molecules oriented longitudinally along the tapes and the outer layers are polyethylene.

10. A tubular body as claimed in Claim 6, characterised in that the tapes are of thermoplastic material having longitudinally oriented reinforcing filaments located internally in the tapes.

11. A tubular body as claimed in any one of Claims 2 to 10, characterised in that the tapes provide a predetermined and controlled porosity which is a function of the width of the tapes and their arrangement in the braided body.

12. A tubular body as claimed in any one of Claims 2 to 10, characterised in that the retaining means comprises flat non-woven strips of a foraminous material which are braided with fusible flat reinforced tapes, the strips of non-woven foraminous material operating as retainer means and the tapes operating as strengthening means and said tapes further providing a predetermined and controlled porosity which is a function of the width of the tapes and their arrangement in the braided body.

13. A tubular body as claimed in Claim 1, characterised in that the tubular body occurs in a collapsed form.

14. A tubular body as claimed in Claim 1, characterised in that the retaining means comprises an inner tubular part of braided fibers of a foraminous material, and the latticework is of reinforced thermoplastic tapes braided around the inner tubular part along oppositely directed helical paths of intersection to form a seamless latticework, overlapping portions of the thermoplastic tapes in the latticework being fusion integrated with one another and remaining portions of the tapes having the fibers of the foraminous material embedded therein.

15. A tubular body as claimed in Claim 14, characterised in that the braided tape latticework includes additional tapes axiall disposed of the tubular body in the latticework.

16. A tubular body as claimed in Claim 15, characterised in that some of the additional tapes are axially disposed in the latticework in substantially abutting relation to one another to mask and substantially seal off a portion of the periphery of the tubular body.

17. A multi-tubular body for use in lead-acid storage battery plates, characterised by a first array of fusible flat reinforced thermoplastic tapes oriented parallel to the central axes of the tubes, and a second array of tapes oriented at right angles to the first array, the first and second arrays being woven together with corresponding arrays of foraminous material on a "cartridge-belt" loom to form a series of interconnected individual tubes, the tapes being fusion integrated with one another at their points of overlap to define opposing interwoven lattice structures presenting quadrilateral openings having said foraminous material captured therein, the porosity of the tubes being predetermined and controlled by the width of the tapes, their arrangement in the weave and the foraminous material.

18. A method of making a textured tubular body for use in a tubular storage battery plate, characterised by braiding reinforced thermoplastic tapes along oppositely directed helical paths of travel in spaced relation to define a seamless latticework in which interrupted rows of spaces occur angularly with respect to one another, and simultaneously braiding a network of foraminous material which is interwoven with the latticework while confining said foraminous material between edges of the spaced apart tapes to provide a desired porosity characteristic in the textured material.

19. A method as claimed in Claim 18, characterised by subjecting the mixture of braided tapes in the latticework and the interwoven foraminous material of the network to heat and pressure to fusibly integrate overlapping tape portions and to embed the foraminous material of the network in tape parts.

20. A method as claimed in Claim 19, characterised in that the mixture of tapes and the network of foraminous material is selected in accordance with a mathematically derived relationship which is made with respect to a desired porosity characteristic in the tubular body.

21. A method as claimed in any one of Claims 18 to 20, characterised by winding the textured tubular body in a collapsed form around a storage reel, taking a length from the reel and then feeding that length to heat and pressure to induce fusing of tape portions and embedding of foraminous material in the tapes, shaping the tubular body which is in a fused state to provide a desired cross-sectional configuration, and then cutting to a desired length.

22. A method as claimed in Claim 18, characterised by braiding a substantially continuous seamless outer support tube comprising fusible flat reinforced thermoplastic tapes over an inner foraminous tube, threading both tubes over a mandrel, applying heat and pressure to fuse the tapes to one another at their points of intersection while simultaneously forming the tube to a desired shape and dimension, which shape and dimension are controlled by the cross-sectional configuration of the mandrel, and then cutting to length.

23. A method as claimed in Claim 22, characterised in that the material of the inner foraminous tube is at least partially embedded in the surfaces of the tapes at the points where the tapes overlie the inner foraminous tube by the same application of heat and pressure used to fuse the tapes to one another and to form the tube.

24. A method of making a textured multi-tubular body according to Claim 18, characterised by simultaneously weaving fusibly flat reinforced thermoplastic tapes and foraminous material on a "cartridge-belt" loom to form a series of interconnected individual tubes, and fusion integrating the tapes with one another at their points of overlap to define opposing interwoven lattice structures presenting quadrilateral openings having said foraminous material captured therein, the porosity of the tubes being predetermined and controlled by the width of the tapes, their arrangement in the weave and the foraminous material.

0021793

Fig. 1

Fig.2A

Fig. 2

Fig.3

Fig. 4

2/10

**Fig. 5**

**Fig. 6**

**Fig. 6A**

**Fig. 6B**

**Fig. 8**

**Fig. 9**

BRAIDER

Fig. 17

Fig. 7

Fig.10

Fig.12

Fig.13

Fig.14

**Fig.11A**

**Fig.11C**

**Fig.11B**

**Fig.11D**

**Fig.15**

0021793

6//O

*Fig. 16*

T2   T6

T4

*Fig. 28*

F5

F3

W3

W4

Y

X

Fig. 20

Fig. 19

Fig. 18

0021793

Fig. 23

Fig. 24

Fig. 27

Fig. 21

Fig. 22

*Fig. 25*

*Fig. 26*

## European Patent Office

# EUROPEAN SEARCH REPORT

Application number

EP 80 30 2063

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | US - A - 3 081 368 (E. WUNSCHE)<br>* Claim 1; figure 4 *<br>-- | | H 01 M 4/76 |
| A | US - A - 4 144 115 (E. SUNDBERG)<br>* Figure 4; claims 1,2,3,5 *<br>-- | | |
| A | GB - A - 1 009 059 (VARTA)<br>* Figures 6,7a; claims 1,2 *<br>-- | | |
| A | GB - A - 844 544 (AKTIEBOLAGET TUDOR)<br>* Claims 1-3,5 *<br>-- | | TECHNICAL FIELDS SEARCHED (Int.Cl.3)<br><br>H 01 M 4/76 |
| A | US - A - 4 042 436 (E. SUNDBERG and E. WESTBERG)<br>* Claims 1-4 *<br>-- | | |
| A | FR - A - 1 026 543 (A. TOUZOT)<br>* Page 3, left-hand column, lines 34-40; left-hand column line 49 - right-hand column, line 8; figures 10,12,13 *<br>-- | | |
| A | US - A - 4 008 100 (E.G. SUNDBERG and E. WESTBERG)<br>* Claim 1; column 4, lines 23-30 *<br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-09-1980 | D'HONDT |

EPO Form 1503.1  06.78